(19) Europäisches Patentamt
European Patent Office
Office européen des brevets

(11) **EP 4 131 078 A1**

(12) **EUROPEAN PATENT APPLICATION**
published in accordance with Art. 153(4) EPC

(43) Date of publication:
**08.02.2023 Bulletin 2023/06**

(21) Application number: **21918850.5**

(22) Date of filing: **21.06.2021**

(51) International Patent Classification (IPC):
**G06N 3/04** (2000.01)      **G06K 9/62** (1980.01)

(52) Cooperative Patent Classification (CPC):
**G06F 18/00; G06N 3/04; G06N 20/20**

(86) International application number:
**PCT/CN2021/101319**

(87) International publication number:
**WO 2022/151654 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.01.2021 CN 202110046246**

(71) Applicant: **Ennew Digital Technology Co., Ltd.
Langfang, Hebei 065001 (CN)**

(72) Inventors:
• **ZHANG, Jinyi
  Beijing 100020 (CN)**
• **LI, Zhenfei
  Beijing 100020 (CN)**

(74) Representative: **Bayramoglu et al.
Mira Office
Kanuni Sultan Süleyman Boulevard 5387
Street Beytepe, floor 12, no:50
06800 Cankaya, Ankara (TR)**

(54) **RANDOM GREEDY ALGORITHM-BASED HORIZONTAL FEDERATED GRADIENT BOOSTED TREE OPTIMIZATION METHOD**

(57) A random greedy algorithm-based horizontal federated gradient boosted tree optimization method, which comprises the following steps: a coordinator configures gradient boosted tree model relevant parameters, which comprise but are not limited to a maximum number of decision trees (T), a maximum tree depth (L), an initial prediction value (base), etc., and sends same to each participant (p_i); and each participant partitions a current node dataset according to a partition feature f and a partition value v, and allocates new partitioned data to a child node. In the present random greedy algorithm-based horizontal federated gradient boosted tree optimization method, horizontal federated learning comprises participants and a coordinator, the participants possess local data, the coordinator does not possess any data, and is a center that aggregates participant information, the participants respectively calculate a histogram and send the histogram to the coordinator, and after collecting all histogram information, the coordinator searches for a maximally optimal partition point according to a greedy algorithm, and then shares same with each participant, and operates in coordination with an internal algorithm.

FIG. 1

**Description**

**TECHNICAL FIELD**

The present application relates to the technical field of federated learning, in particular to a horizontal federated Gradient Boosting Decision Tree optimization method based on a random greedy algorithm.

**BACKGROUND**

Federated learning is a machine learning framework, which can effectively help multiple organizations to model data usage and machine learning while meeting the requirements of user privacy protection, data security and government regulations, so that participants can jointly implement modeling on the basis of unshared data, which can technically break the data island and realize AI collaboration. Under this framework, the problem of collaboration among different data owners without exchanging data is solved by designing virtual models. A virtual model is the best model for all parties to aggregate data together. Each region serves the local target according to the model. Federated learning requires that the modeling results should be infinitely close to the traditional model, that is, the data of multiple data owners are gathered in one place for modeling. Under the federated mechanism, each participant has the same identity and status, and a data sharing strategy can be established. A greedy algorithm is a simpler and faster design technology for some optimal solutions. The characteristic of the greedy algorithm is that it is carried out step by step, often based on the current situation, the optimal selection is made according to an optimization measure, without considering all possible overall situations, which saves a lot of time that must be spent to exhaust all possibilities to find the optimal solution. The greedy algorithm adopts the top-down and iterative method to make successive greedy choices. Every time a greedy choice is made, the required problem is simplified to a smaller sub-problem. Through every greedy choice, an optimal solution of the problem can be obtained. Although the local optimal solution must be obtained in every step, the global solution generated therefrom is sometimes not necessarily optimal, so the greedy algorithm should not backtrack.

However, the existing horizontal federated Gradient Boosting Decision Tree algorithm requires each participant and coordinator to frequently transmit histogram information, which requires high network bandwidth of the coordinator, and the training efficiency is easily affected by the network stability. Moreover, because the transmitted histogram information contains user information, there is a risk of leaking user privacy. After introducing privacy protection solutions such as multi-party secure computing, homomorphic encryption and secret sharing, the possibility of user privacy leakage can be reduced, but the local computing burden will be increased and the training efficiency will be reduced.

**SUMMARY**

The purpose of the present application is to provide a horizontal federated Gradient Boosting Decision Tree optimization method based on a random greedy algorithm, which aims to solve the problem that the existing horizontal federated Gradient Boosting Decision Tree algorithm proposed in the above background technology requires all participants and coordinators to frequently transmit histogram information, which has high requirements on the network bandwidth of the coordinators, and the training efficiency is easily affected by the network stability, and because the transmitted histogram information contains user information, there is a risk of leaking user privacy. After introducing privacy protection solutions such as multi-party secure computing, homomorphic encryption and secret sharing, the possibility of user privacy leakage can be reduced, but the local computing burden will be increased and the training efficiency will be reduced.

In order to achieve the above objectives, the present application provides the following technical solution: a horizontal federated Gradient Boosting Decision Tree optimization method based on a random greedy algorithm includes the following steps:

Step 1: a coordinator setting relevant parameters of a Gradient Boosting Decision Tree model, including a maximum number of decision trees T, a maximum depth of trees L, an initial predicted value base, etc., and sending the relevant parameters to respective participants $p_i$;

Step 2: letting a tree counter t=1;

Step 3 : for each participant $p_i$, initializing a training target of a $k^{th}$ tree $y_k = y_{k-1} - \hat{y}_{k-1}$; wherein $y_0 = y, \hat{y}_0 = base$;

Step 4: letting a tree layer counter l=1;

Step 5: letting a node counter of a current layer n=1;

Step 6: for each participant $p_i$, determining a segmentation point of a local current node n according to the data of the current node and an optimal segmentation point algorithm and sending the segmentation point information to the coordinator;

Step 7: the coordinator counting the segmentation point information of all participants, and determining a segmentation feature f and a segmentation value v according to an epsilon- greedy algorithm;

Step 8, the coordinator sending the finally determined segmentation information, including the determined segmentation feature f and segmentation value v, to respective participants;

Step 9: each participant segmenting a data set of the current node according to the segmentation feature f and the segmentation value v, and distributing new segmentation data to child nodes;

Step 10: letting n=n+1, and continuing with the Step 3 if n is less than or equal to a maximum number of nodes in the current layer; otherwise, proceeding to a next step;

Step 11: resetting the node information of the current layer according to the child nodes of a node of a $l^{th}$ layer, so that l=l+1, and continuing with the Step 5 if 1 is less than or equal to the maximum tree depth L; otherwise, proceeding to a next step;

Step 12: letting t=t+1, and continuing with the Step 3 if t is greater than or equal to the maximum number of decision trees T; otherwise, ending.

Preferably, the optimal segmentation point algorithm in the Step 6:

I, determines a segmentation objective function, including but not limited to the following objective functions:

information gain: information gain is the most commonly used index to measure a purity of a sample set; assuming that there are K types of samples in a node sample set D, in which a proportion of a $k^{th}$ type of samples is $p_k$, an information entropy of D is defined as:

$$\text{Ent}(D) = -\sum_{k=1}^{|K|} p_k \log_2 p_k$$

assuming that the node is segmented into V possible values according to an attribute a, the information gain is defined as:

$$\text{Gain}(D,a) = \text{Ent}(D) - \sum_{v=1}^{V} \frac{|D^v|}{|D|} \text{Ent}(D^v);$$

information gain rate:

$$\text{Gain\_ratio}(D,a) = \frac{\text{Gain}(D,a)}{IV(a)}$$

where

$$IV(a) = -\sum_{v=1}^{V} \frac{|D^v|}{|D|} \log_2 \frac{|D^v|}{|D|}$$

a Gini coefficient:

$$\text{Gini}(D) = \sum_{k=1}^{|K|} \sum_{k' \neq k} p_k p_{k'}$$

$$\text{Gini\_index}(D,a) = \sum_{v=1}^{V} \frac{|D^v|}{|D|} \text{Gini}(D^v)$$

a structural coefficient:

$$\text{Gain} = \frac{1}{2}\left(\frac{G_L^2}{H_L+\lambda} + \frac{G_R^2}{H_R+\lambda} - \frac{G^2}{H+\lambda}\right) - \gamma$$

where $G_L$ is a sum of first-order gradients of the data set divided into a left node according to the segmentation point, $H_L$ is a sum of second-order gradients of the data set of the left node, and $G_R$ and $H_R$ are sums of the gradient information of a corresponding right node, $\gamma$ is a tree model complexity penalty term and $\lambda$ is a second-order regular term;

II, determines a candidate list of segmentation values: determining the list of segmentation values according to the data distribution of the current node, wherein the segmentation values comprise segmentation features and segmentation feature values; the list of segmentation value is determined according to the following method:

all values of all features in the data set;

determining a discrete segmentation point according to a value range of each feature in the data set; wherein the selection of the segmentation points can be evenly distributed within the value range according to the distribution of data, and the amount of data uniformly reflected between the segmentation points is approximately equal or a sum of the second-order gradients is approximately equal;

traversing the candidate list of segmentation values to find the segmentation point that makes the objective function optimal.

Preferably, the Epsilon greedy algorithm in the Step 7 includes: for the node n, each participant sending the node segmentation point information to the coordinator, including a segmentation feature $f_i$, a segmentation value $v_i$, a number of node samples $N_i$ and a local objective function gain $g_i$, where i represents respective participants;

according to the segmentation information of each participant and based on a maximum number principle, the coordinator determining an optimal segmentation feature $f_{max}$, where X is a random number evenly distributed among [0,1] and randomly sampling X to obtain x; if x<=epsilon, randomly selecting one of the segmentation features of each participant as a global segmentation feature; otherwise, selecting $f_{max}$ as the global segmentation feature; each participant recalculating the segmentation information according to the global segmentation feature and sending the segmentation information to the coordinator;

the coordinator determining a global segmentation value according to the following formula: if the total number of participants is P,

$$v = \sum_{i=1}^{P} \frac{N_i g_i}{\sum_{j=1}^{P} N_j g_j} v_i ;$$

distributing the segmentation value to each participant to perform node segmentation.

Preferably, the horizontal federated learning is a distributed structure of federated learning, in which each distributed node has the same data feature and different sample spaces.

Preferably, the Gradient Boosting Decision Tree algorithm is an integrated model based on gradient boosting and decision tree.

Preferably, the decision tree is a basic model of a Gradient Boosting Decision Tree model, and a prediction direction of a sample is judged at the node by given features based on a tree structure.

Preferably, the segmentation point is a segmentation position of non-leaf nodes in the decision tree for data segmentation.

Preferably, the histogram is statistical information representing the first-order gradient and the second-order gradient in node data.

Preferably, an input device can be one or more of data terminals such as computers and mobile phones or mobile terminals.

Preferably, the input device comprises a processor, and when executed by the processor, the algorithm of any one of steps 1 to 12 is implemented.

Compared with the prior art, the present application has the following beneficial effects: the horizontal federated Gradient Boosting Decision Tree optimization method based on a random greedy algorithm setting relevant parameters of a Gradient Boosting Decision Tree model, including but not limited to a maximum number of decision trees T, a maximum depth of trees L, an initial predicted value base, etc., and sending the relevant parameters to respective participants $p_i$; letting a tree counter t=1; for each participant $p_i$, letting a tree layer counter l=1; letting a node counter of a current layer n=1; for each participant $p_i$, determining a segmentation point of a local current node n according to the data of the current node and an optimal segmentation point algorithm and sending the segmentation point information to the coordinator; the coordinator counting the segmentation point information of all participants, and determining a segmentation feature f and a segmentation value v according to an epsilon-greedy algorithm; the coordinator sending the finally determined segmentation information, including but not limited to the determined segmentation feature f and segmentation value v, to respective participants; each participant segmenting a data set of the current node according to the segmentation feature f and the segmentation value v, and distributing new segmentation data to child nodes; letting n=n+1, and continuing with the Step 6 if n is less than or equal to a maximum number of nodes in the current layer; otherwise, proceeding to a next step; resetting the node information of the current layer according to the child nodes of a node of a $l^{th}$ layer, so that l=l+1, and continuing with the Step 5 if l is less than or equal to the maximum tree depth L; otherwise, proceeding to a next step; letting t=t+1, and continuing with the Step 3 if t is greater than or equal to the maximum number of decision trees T; otherwise, ending. The supported horizontal federated learning includes participants and coordinators, wherein the participants have local data, the coordinators do not have any data, and the center for information aggregation of participants; participants calculate histograms separately and send them to the coordinators; after summarizing all histogram information, the coordinators find the optimal segmentation points according to the greedy algorithm, and then share them with respective participants to facilitate work with internal algorithms.

**BRIEF DESCRIPTION OF DRAWINGS**

In order to explain the technical solution in the embodiments of the present application more clearly, the drawings necessary for the description of the embodiments or the prior art the following will be briefly introduced. Obviously, the drawings in the following description are only some embodiments of the present application, and for those skilled in the art, other drawings can be obtained according to these drawings without creative efforts.

FIG. 1 is a schematic diagram of the horizontal federated Gradient Boosting Decision Tree optimization method based on a random greedy algorithm of the present application;
FIG. 2 is a schematic diagram of the steps of the horizontal federated Gradient Boosting Decision Tree optimization method based on a random greedy algorithm of the present application;
FIG. 3 is a schematic diagram for judging the horizontal federated Gradient Boosting Decision Tree optimization method based on a random greedy algorithm of the present application.

**DESCRIPTION OF EMBODIMENTS**

Next, the technical solutions in the embodiments of the present application will be clearly and completely described with reference to the drawings in the embodiments of the present application. Obviously, the described embodiments are only part of, not all of the embodiments of the present application. Based on the embodiments in the present application, all other embodiments obtained by those skilled in the art without creative work are within the scope of the present application.

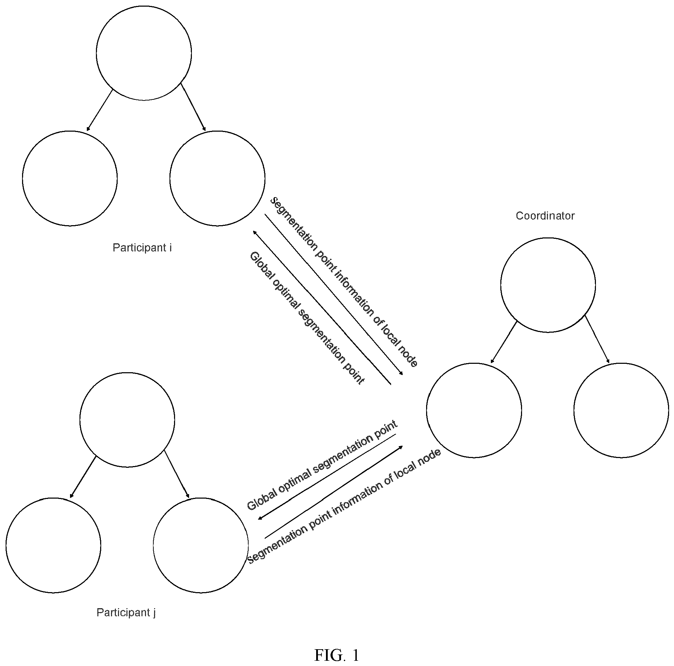

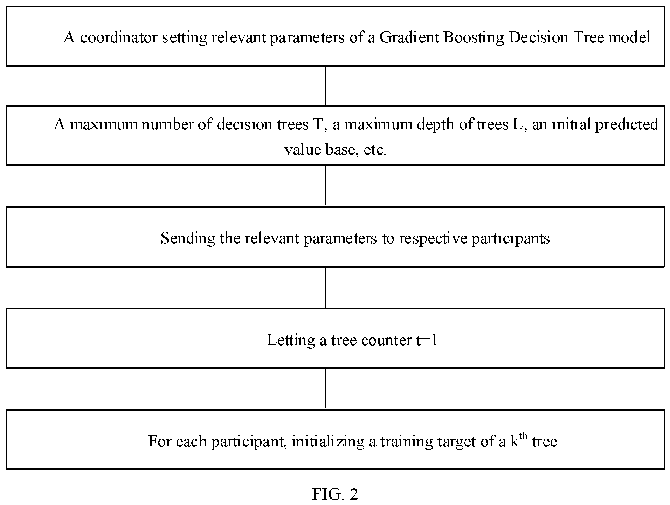

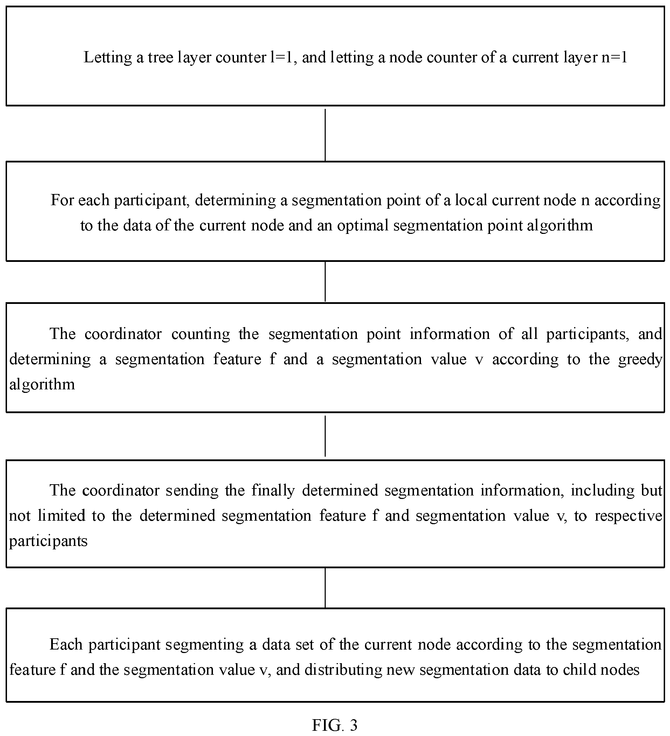

Referring to FIG. 1-3, the present application provides a technical solution: a horizontal federated Gradient Boosting Decision Tree optimization method based on a random greedy algorithm, which includes the following steps:

Step 1: a coordinator setting relevant parameters of a Gradient Boosting Decision Tree model, including a maximum number of decision trees T, a maximum depth of trees L, an initial predicted value base, etc., and sending the relevant parameters to respective participants $p_i$;
Step 2: letting a tree counter t=1;
Step 3: for each participant $p_i$, initializing a training target of a $k^{th}$ tree $y_k = y_{k-1} - \hat{y}_{k-1}$; wherein $y_0 = y, y_0 = base$;
Step 4: letting a tree layer counter l=1;
Step 5: letting a node counter of a current layer n=1;
Step 6: for each participant $p_i$, determining a segmentation point of a local current node n according to the data of the current node and an optimal segmentation point algorithm and sending the segmentation point information to the coordinator;
Step 7: the coordinator counting the segmentation point information of all participants, and determining a segmentation feature f and a segmentation value v according to an epsilon- greedy algorithm;
Step 8, the coordinator sending the finally determined segmentation information, including the determined segmentation feature f and segmentation value v, to respective participants;

Step 9: each participant segmenting a data set of the current node according to the segmentation feature f and the segmentation value v, and distributing new segmentation data to child nodes;

Step 10: letting n=n+1, and continuing with the Step 3 if n is less than or equal to a maximum number of nodes in the current layer; otherwise, proceeding to a next step;

Step 11: resetting the node information of the current layer according to the child nodes of a node of a lth layer, so that l=l+1, and continuing with the Step 5 if 1 is less than or equal to the maximum tree depth L; otherwise, proceeding to a next step;

Step 12: letting t=t+1, and continuing with the Step 3 if t is greater than or equal to the maximum number of decision trees T; otherwise, ending.

Furthermore, the optimal segmentation point algorithm in the Step 6:

I, determines a segmentation objective function, including but not limited to the following objective functions:

information gain: information gain is the most commonly used index to measure a purity of a sample set; assuming that there are K types of samples in a node sample set D, in which a proportion of a kth type of samples is $p_k$, an information entropy of D is defined as:

$$\text{Ent}\left(D\right) = -\sum_{k=1}^{|K|} p_k \log_2 p_k$$

assuming that the node is segmented into V possible values according to an attribute a, the information gain is defined as:

$$Gain(D,a) = Ent(D) - \sum_{v=1}^{V} \frac{\left|D^v\right|}{\left|D\right|} \text{Ent}(D^v) \ ;$$

information gain rate:

$$\text{Gain\_ratio}(D,a) = \frac{\text{Gain}(D,a)}{\text{IV}(a)}$$

where

$$\text{IV}\left(a\right) = -\sum_{v=1}^{V} \frac{\left|D^v\right|}{\left|D\right|} \log_2 \frac{\left|D^v\right|}{\left|D\right|}$$

a Gini coefficient:

$$\text{Gini}\left(D\right) = \sum_{k=1}^{|K|} \sum_{k' \neq k} p_k p_{k'}$$

$$\text{Gini\_index}(D,a) = \sum_{v=1}^{V} \frac{\left|D^v\right|}{\left|D\right|} \text{Gini}(D^v)$$

a structural coefficient:

$$\text{Gain} = \frac{1}{2}\left(\frac{G_L^2}{H_L+\lambda} + \frac{G_R^2}{H_R+\lambda} - \frac{G^2}{H+\lambda}\right) - \gamma$$

where $G_L$ is a sum of first-order gradients of the data set divided into a left node according to the segmentation point, $H_L$ is a sum of second-order gradients of the data set of the left node, and $G_R$ and $H_R$ are sums of the gradient information of a corresponding right node, $\gamma$ is a tree model complexity penalty term and $\lambda$ is a second-order regular term;

II, determines a candidate list of segmentation values: determining the list of segmentation values according to the data distribution of the current node, wherein the segmentation values comprise segmentation features and segmentation feature values; the list of segmentation value is determined according to the following method:

all values of all features in the data set;
determining a discrete segmentation point according to a value range of each feature in the data set; wherein the selection of the segmentation points can be evenly distributed within the value range according to the distribution of data, and the amount of data uniformly reflected between the segmentation points is approximately equal or a sum of the second-order gradients is approximately equal;
traversing the candidate list of segmentation values to find the segmentation point that makes the objective function optimal.

Furthermore, the Epsilon greedy algorithm in the Step 7 includes: for the node n,

each participant sending the node segmentation point information to the coordinator, including a segmentation feature $f_i$, a segmentation value $v_i$, a number of node samples $N_i$ and a local objective function gain $g_i$, where i represents respective participants;
according to the segmentation information of each participant and based on a maximum number principle, the coordinator determining an optimal segmentation feature $f_{max}$,
where X is a random number evenly distributed among [0,1] and randomly sampling X to obtain x; if x<=epsilon, randomly selecting one of the segmentation features of each participant as a global segmentation feature; otherwise, selecting $f_{max}$ as the global segmentation feature;
each participant recalculating the segmentation information according to the global segmentation feature and sending the segmentation information to the coordinator;
the coordinator determining a global segmentation value according to the following formula: if the total number of participants is P,

$$v = \sum_{i=1}^{P} \frac{N_i g_i}{\sum_{j=1}^{P} N_j g_j} v_i \, ;$$

distributing the segmentation value to each participant to perform node segmentation.

Furthermore, the horizontal federated learning is a distributed structure of federated learning, in which each distributed node has the same data feature and different sample spaces, which can facilitate comparison work.
Furthermore, the Gradient Boosting Decision Tree algorithm is an integrated model based on gradient boosting and decision tree, which can facilitate work.
Furthermore, the decision tree is a basic model of a Gradient Boosting Decision Tree model, and a prediction direction of a sample is judged at the node by given features based on a tree structure, which can facilitate prediction.
Furthermore, the segmentation point is a segmentation position of non-leaf nodes in the decision tree for data segmentation, which can facilitate segmentation.
Furthermore, the histogram is statistical information representing the first-order gradient and the second-order gradient in node data, which can facilitate more intuitive representation.
Furthermore, an input device can be one or more of data terminals such as computers and mobile phones or mobile terminals, which can facilitate data input.
Furthermore, the input device comprises a processor, and when executed by the processor, the algorithm of any one of steps 1 to 12 is implemented.

The working principle is as below: Step 1: a coordinator setting relevant parameters of a Gradient Boosting Decision Tree model, including a maximum number of decision trees T, a maximum depth of trees L, an initial predicted value base, etc., and sending the relevant parameters to respective participants $p_i$; Step 2: letting a tree counter t=1; Step 3: for each participant $p_i$, initializing a training target of a $k^{th}$ tree $y_k = y_{k-1} - \hat{y}_{k-1}$; wherein $y_0 = y, \hat{y}_0 = base$; Step 4: letting a tree layer counter l=1; Step 5: letting a node counter of a current layer n=1; Step 6: for each participant $p_i$, determining a segmentation point of a local current node n according to the data of the current node and an optimal segmentation point algorithm and sending the segmentation point information to the coordinator; I. I, determines a segmentation objective function, including but not limited to the following objective functions:

information gain: information gain is the most commonly used index to measure a purity of a sample set; assuming that there are K types of samples in a node sample set D, in which a proportion of a $k^{th}$ type of samples is $p_k$, an information entropy of D is defined as:

$$\text{Ent}(D) = -\sum_{k=1}^{|K|} p_k \log_2 p_k$$

assuming that the node is segmented into V possible values according to an attribute a, the information gain is defined as:

$$Gain(D,a) = \text{Ent}(D) - \sum_{v=1}^{V} \frac{|D^v|}{|D|} \text{Ent}(D^v);$$

information gain rate:

$$\text{Gain\_ratio}(D,a) = \frac{\text{Gain}(D,a)}{\text{IV}(a)}$$

where

$$\text{IV}(a) = -\sum_{v=1}^{V} \frac{|D^v|}{|D|} \log_2 \frac{|D^v|}{|D|}$$

a Gini coefficient:

$$\text{Gini}(D) = \sum_{k=1}^{|K|} \sum_{k' \neq k} p_k p_{k'}$$

$$\text{Gini\_index}(D,a) = \sum_{v=1}^{v} \frac{|D^v|}{|D|} \text{Gini}(D^v)$$

a structural coefficient:

$$\text{Gain} = \frac{1}{2}\left( \frac{G_L^2}{H_L+\lambda} + \frac{G_R^2}{H_R+\lambda} - \frac{G^2}{H+\lambda} \right) - \gamma$$

where $G_L$ is a sum of first-order gradients of the data set divided into a left node according to the segmentation point, $H_L$ is a sum of second-order gradients of the data set of the left node, and $G_R$ and $H_R$ are sums of the gradient information of a corresponding right node, $\gamma$ is a tree model complexity penalty term and $\lambda$ is a second-order regular term;

II, determines a candidate list of segmentation values: determining the list of segmentation values according to the data distribution of the current node, wherein the segmentation values comprise segmentation features and segmentation feature values; the list of segmentation value is determined according to the following method:

all values of all features in the data set;

determining a discrete segmentation point according to a value range of each feature in the data set; wherein the selection of the segmentation points can be evenly distributed within the value range according to the distribution of data, and the amount of data uniformly reflected between the segmentation points is approximately equal or a sum of the second-order gradients is approximately equal;

traversing the candidate list of segmentation values to find the segmentation point that makes the objective function optimal; Step 7: the coordinator counting the segmentation point information of all participants, and determining a segmentation feature f and a segmentation value v according to an epsilon- greedy algorithm; for the node n,

each participant sending the node segmentation point information to the coordinator, including a segmentation feature $f_i$, a segmentation value $v_i$, a number of node samples $N_i$ and a local objective function gain $g_i$, where i represents respective participants;

according to the segmentation information of each participant and based on a maximum number principle, the coordinator determining an optimal segmentation feature $f_{max}$,

where X is a random number evenly distributed among [0,1] and randomly sampling X to obtain x; if x<=epsilon, randomly selecting one of the segmentation features of each participant as a global segmentation feature; otherwise, selecting $f_{max}$ as the global segmentation feature;

each participant recalculating the segmentation information according to the global segmentation feature and sending the segmentation information to the coordinator;

the coordinator determining a global segmentation value according to the following formula: if the total number of participants is P,

$$v = \sum_{i=1}^{P} \frac{N_i g_i}{\sum_{j=1}^{P} N_j g_j} v_i;$$

distributing the segmentation value to each participant to perform node segmentation; Step 8, the coordinator sending the finally determined segmentation information, including the determined segmentation feature f and segmentation value v, to respective participants; Step 9: each participant segmenting a data set of the current node according to the segmentation feature f and the segmentation value v, and distributing new segmentation data to child nodes; Step 10: letting n=n+1, and continuing with the Step 3 if n is less than or equal to a maximum number of nodes in the current layer; otherwise, proceeding to a next step; Step 11: resetting the node information of the current layer according to the child nodes of a node of a $l^{th}$ layer, so that l=l+1, and continuing with the Step 5 if 1 is less than or equal to the maximum tree depth L; otherwise, proceeding to a next step; Step 12: letting t=t+1, and continuing with the Step 3 if t is greater than or equal to the maximum number of decision trees T; otherwise, ending. The coordinator sets relevant parameters of a Gradient Boosting Decision Tree model, including but not limited to a maximum number of decision trees, a maximum depth of trees, an initial predicted value, etc., and sending the relevant parameters to respective participants; the coordinator sends the finally determined segmentation information, including but not limited to the determined segmentation feature and segmentation value, to all participants, and each participant segments the data set of the current node according to the segmentation feature and segmentation value. The supported horizontal federated learning includes participants and coordinators, wherein the participants have local data, the coordinators do not have any data, and the center for information aggregation of participants; participants calculate histograms separately and send them to the coordinators; after summarizing all histogram information, the coordinators find the optimal segmentation points according to the greedy algorithm, and then share them with respective participants to facilitate work with internal algorithms.

Although the embodiments of the present application have been shown and described, it will be understood by those skilled in the art that many changes, modifications, substitutions and variations can be made to these embodiments without departing from the principles and spirit of the present application, the scope of which is defined by the appended claims and their equivalents.

**Claims**

1. A horizontal federated Gradient Boosting Decision Tree optimization method based on a random greedy algorithm, comprising the following steps:

   Step 1: a coordinator setting relevant parameters of a Gradient Boosting Decision Tree model, including a maximum number of decision trees T, a maximum depth of trees L, an initial predicted value base, etc., and sending the relevant parameters to respective participants $p_i$;

   Step 2: letting a tree counter t=1;

   Step 3: for each participant $p_i$, initializing a training target of a $k^{th}$ tree $y_k = y_{k-1} - \hat{y}_{k-1}$; wherein $y_0 = y, \hat{y}_0 = base$;

   Step 4: letting a tree layer counter l=1;

   Step 5: letting a node counter of a current layer n=1;

   Step 6: for each participant $p_i$, determining a segmentation point of a local current node n according to the data of the current node and an optimal segmentation point algorithm and sending the segmentation point information to the coordinator;

   Step 7: the coordinator counting the segmentation point information of all participants, and determining a segmentation feature f and a segmentation value v according to an epsilon- greedy algorithm;

   Step 8, the coordinator sending the finally determined segmentation information, including the determined segmentation feature f and segmentation value v, to respective participants;

   Step 9: each participant segmenting a data set of the current node according to the segmentation feature f and the segmentation value v, and distributing new segmentation data to child nodes;

   Step 10: letting n=n+1, and continuing with the Step 3 if n is less than or equal to a maximum number of nodes in the current layer; otherwise, proceeding to a next step;

   Step 11: resetting the node information of the current layer according to the child nodes of a node of a $l^{th}$ layer, so that l=l+1, and continuing with the Step 5 if l is less than or equal to the maximum tree depth L; otherwise, proceeding to a next step;

   Step 12: letting t=t+1, and continuing with the Step 3 if t is greater than or equal to the maximum number of decision trees T; otherwise, ending.

2. The horizontal federated Gradient Boosting Decision Tree optimization method based on a random greedy algorithm according to claim 1, wherein the optimal segmentation point algorithm in the Step 3 :

   determines a segmentation objective function, including an objective function,

   information gain: information gain is the most commonly used index to measure a purity of a sample set; assuming that there are K types of samples in a node sample set D, in which a proportion of a $k^{th}$ type of samples is $p_k$, an information entropy of D is defined as:

$$Ent(D) = -\sum_{k=1}^{|K|} p_k \log_2 p_k$$

   assuming that the node is segmented into V possible values according to an attribute a, the information gain is defined as:

$$Gain(D,a) = Ent(D) - \sum_{v=1}^{V} \frac{|D^v|}{|D|} Ent(D^v);$$

   information gain rate:

$$Gain\_ratio(D,a) = \frac{Gain(D,a)}{IV(a)}$$

   where

$$IV(a) = -\sum_{v=1}^{V} \frac{|D^v|}{|D|} \log_2 \frac{|D^v|}{|D|}$$

a Gini coefficient:

$$Gini(D) = \sum_{k=1}^{|K|} \sum_{k' \neq k} p_k p_{k'}$$

$$Gini\_index(D, a) = \sum_{v=1}^{V} \frac{|D^v|}{|D|} Gini(D^v)$$

a structural coefficient:

$$Gain = \frac{1}{2}\left(\frac{G_L^2}{H_L + \lambda} + \frac{G_R^2}{H_R + \lambda} - \frac{G^2}{H + \lambda}\right) - \gamma$$

where $G_L$ is a sum of first-order gradients of the data set divided into a left node according to the segmentation point, $H_L$ is a sum of second-order gradients of the data set of the left node, and $G_R$ and $H_R$ are sums of the gradient information of a corresponding right node, $\gamma$ is a tree model complexity penalty term and $\lambda$ is a second-order regular term;

determines a candidate list of segmentation values: determining the list of segmentation values according to the data distribution of the current node, wherein the segmentation values comprise segmentation features and segmentation feature values; the list of segmentation value is determined according to the following method: all values of all features in the data set;

determining a discrete segmentation point according to a value range of each feature in the data set;

wherein the selection of the segmentation points can be evenly distributed within the value range according to the distribution of data, and the amount of data uniformly reflected between the segmentation points is approximately equal or a sum of the second-order gradients is approximately equal;

traversing the candidate list of segmentation values to find the segmentation point that makes the objective function optimal.

3. The horizontal federated Gradient Boosting Decision Tree optimization method based on a random greedy algorithm according to claim 1, wherein the Epsilon greedy algorithm in the Step 7 comprises:

for the node n, each participant sending the node segmentation point information to the coordinator, including a segmentation feature $f_i$, a segmentation value $v_i$, a number of node samples $N_i$ and a local objective function gain $g_i$, where i represents respective participants;

according to the segmentation information of each participant and based on a maximum number principle, the coordinator determining an optimal segmentation feature $f_{max}$, where X is a random number evenly distributed among [0,1] and randomly sampling X to obtain x; if x<=epsilon, randomly selecting one of the segmentation features of each participant as a global segmentation feature; otherwise, selecting $f_{max}$ as the global segmentation feature;

each participant recalculating the segmentation information according to the global segmentation feature and sending the segmentation information to the coordinator;

the coordinator determining a global segmentation value according to the following formula: if the total number of participants is P,

$$v = \sum_{i=1}^{P} \frac{N_i g_i}{\sum_{j=1}^{P} N_j g_j} v_i;$$

distributing the segmentation value to each participant to perform node segmentation.

4. The horizontal federated Gradient Boosting Decision Tree optimization method based on a random greedy algorithm according to claim 1, wherein the horizontal federated learning is a distributed structure of federated learning, in which each distributed node has the same data feature and different sample spaces.

5. The horizontal federated Gradient Boosting Decision Tree optimization method based on a random greedy algorithm according to claim 1, wherein the Gradient Boosting Decision Tree algorithm is an integrated model based on gradient boosting and decision tree.

6. The horizontal federated Gradient Boosting Decision Tree optimization method based on a random greedy algorithm according to claim 1, wherein the decision tree is a basic model of a Gradient Boosting Decision Tree model, and a prediction direction of a sample is judged at the node by given features based on a tree structure.

7. The horizontal federated Gradient Boosting Decision Tree optimization method based on a random greedy algorithm according to claim 1, wherein the segmentation point is a segmentation position of non-leaf nodes in the decision tree for data segmentation.

8. The horizontal federated Gradient Boosting Decision Tree optimization method based on a random greedy algorithm according to claim 1, wherein the histogram is statistical information representing the first-order gradient and the second-order gradient in node data.

9. The horizontal federated Gradient Boosting Decision Tree optimization method based on a random greedy algorithm according to claim 1, wherein an input device can be one or more of data terminals such as computers and mobile phones or mobile terminals.

10. The horizontal federated Gradient Boosting Decision Tree optimization method based on a random greedy algorithm according to claim 1, wherein the input device comprises a processor, and when executed by the processor, the algorithm of any one of steps 1 to 12 is implemented.

FIG. 1

A coordinator setting relevant parameters of a Gradient Boosting Decision Tree model

A maximum number of decision trees T, a maximum depth of trees L, an initial predicted value base, etc.

Sending the relevant parameters to respective participants

Letting a tree counter t=1

For each participant, initializing a training target of a $k^{th}$ tree

FIG. 2

Letting a tree layer counter l=1, and letting a node counter of a current layer n=1

For each participant, determining a segmentation point of a local current node n according to the data of the current node and an optimal segmentation point algorithm

The coordinator counting the segmentation point information of all participants, and determining a segmentation feature f and a segmentation value v according to the greedy algorithm

The coordinator sending the finally determined segmentation information, including but not limited to the determined segmentation feature f and segmentation value v, to respective participants

Each participant segmenting a data set of the current node according to the segmentation feature f and the segmentation value v, and distributing new segmentation data to child nodes

FIG. 3

## INTERNATIONAL SEARCH REPORT

| International application No. |
| --- |
| **PCT/CN2021/101319** |

**A.    CLASSIFICATION OF SUBJECT MATTER**

G06N 3/04(2006.01)i;  G06K 9/62(2006.01)i

According to International Patent Classification (IPC) or to both national classification and IPC

**B.    FIELDS SEARCHED**

Minimum documentation searched (classification system followed by classification symbols)

G06N; G06K

Documentation searched other than minimum documentation to the extent that such documents are included in the fields searched

Electronic data base consulted during the international search (name of data base and, where practicable, search terms used)

CNPAT; CNKI; WPI; EPODOC: 随机贪心, 横向, 联邦, 梯度, 树, 模型, 参数, 协调方, 分割, 训练, random, greedy, lateral, federation, gradient, tree, model, parameter, harmonious, segment, training

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109299728 A (SHENZHEN QIANHAI WEBANK CO., LTD.) 01 February 2019 (2019-02-01)<br>        description, paragraphs [0083]-[0137] | 1-10 |
| A | CN 111985270 A (SHENYANG INSTITUTE OF AUTOMATION, CHINESE ACADEMY OF SCIENCES) 24 November 2020 (2020-11-24)<br>        entire document | 1-10 |
| A | CN 111553483 A (TONGDUN HOLDINGS CO., LTD.) 18 August 2020 (2020-08-18)<br>        entire document | 1-10 |
| A | CN 111553470 A (CHENGDU BUSINESS BIG DATA TECHNOLOGY CO., LTD.) 18 August 2020 (2020-08-18)<br>        entire document | 1-10 |
| A | US 2020200648 A1 (DALIAN UNIVERSITY OF TECHNOLOGY) 25 June 2020 (2020-06-25)<br>        entire document | 1-10 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 September 2021** | **12 October 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101319**

| Patent document cited in search report | | | Publication date (day/month/year) | Patent family member(s) | | | Publication date (day/month/year) |
|---|---|---|---|---|---|---|---|
| CN | 109299728 | A | 01 February 2019 | None | | | |
| CN | 111985270 | A | 24 November 2020 | None | | | |
| CN | 111553483 | A | 18 August 2020 | None | | | |
| CN | 111553470 | A | 18 August 2020 | None | | | |
| US | 2020200648 | A1 | 25 June 2020 | CN | 108388860 | A | 10 August 2018 |
| | | | | WO | 2019153388 | A1 | 15 August 2019 |

Form PCT/ISA/210 (patent family annex) (January 2015)